# DEMANDE DE BREVET EUROPEEN

(11) **EP 1 008 796 A2**
(43) Date de publication de la demande: **14.06.2000**
(21) Numéro de dépôt: 99440355.8
(22) Date de dépôt: 10.12.1999
(51) Int. Cl.: F16L 37/12

(54) **Dispositif de raccordement démontable pour le raccordement d'un tube sur une interface au moyen d'une douille coaxiale**

(30) Priorité: 10.12.1998 FR 9815785
(71) Demandeur: MGI COUTIER (S.A.), F-01410 Champfromier (FR)
(72) Inventeur: David, Fabrice, 84140 Montfavet (FR); Peyremorte, Olivier, 84170 Monteux (FR)
(74) Mandataire: Nithardt, Roland

(57) **Abrégé**

La présente invention concerne un dispositif de raccordement de conception simple. assurant un raccordement rapide, étanche, fiable et facilement démontable.

Ledit dispositif comprend un tube (2) ayant un épaulement (11) suivi d'une zone d'extrémité évasée (10), une interface (3) pourvue d'un embout mâle (13) et d'une collerette (15), et une douille (4) présentant à une extrémité un rebord (6) constituant une butée pour l'épaulement (11) du tube (2) et à l'autre extrémité des griffes d'accrochage (8) destinées à s'accrocher et à se verrouiller sur la collerette (15) de l'interface (3).

## Description

La présente invention concerne un dispositif de raccordement démontable pour le raccordement d'un tube sur une interface au moyen d'une douille coaxiale.

Ce type de dispositif de raccordement est généralement utilisé dans les circuits de transfert de fluide (carburant, vapeurs carburant, air, etc.) sur véhicule automobile.

Dans ces circuits, on utilise actuellement des manchons caoutchouc avec ou sans collier, ou bien des raccords de type rapide ou encliquetables, afin de réaliser une liaison étanche et démontable entre un tube et une interface (ou bien entre deux tubes).

Les raccords utilisés font intervenir de nombreux composants (joints toriques, bagues, douilles, poussoirs, corps plastiques et parfois des composants métalliques, tels que griffes et agrafes). De plus, ils nécessitent, dans de nombreux cas, une interface mâle spécifique en plus du raccord, ce qui se traduit par un coût de fabrication plus élevé.

Dans la publication GB-A-2 086 514, le dispositif de raccordement comporte un embout mâle inséré dans un embout femelle et une douille fendue disposée autour de l'embout femelle et pourvue de moyens de retenue coopérant avec des moyens complémentaires prévus sur les deux embouts. La douille est verrouillée sur ces embouts au moyen d'un collier de serrage. De même, la publication FR-A-1 234 795 concerne un dispositif de raccordement entre un manchon et un embout, comportant deux demi-coquilles assemblées par une bague de serrage. Ces deux exemples démontrent clairement la technique la plus répandue qui utilise une douille et un collier de serrage.

La publication CH-A-400 686 décrit une autre technique, ne nécessitant pas de collier de serrage, mais qui n'est pas applicable au domaine du transfert des fluides. Le dispositif de raccordement est agencé pour raccorder un tuyau souple sur un boîtier et comporte un manchon monté sur ledit boîtier, pourvu d'un filetage et d'un épaulement, agencé pour recevoir l'extrémité du tuyau souple et une douille agencée pour se visser sur le manchon et bloquer l'extrémité du tuyau souple contre l'épaulement du manchon. Les surfaces en contact entre le manchon, le tuyau souple et la douille sont très réduites et ne permettent donc pas d'assurer à la fois un bon maintien mécanique du tuyau et l'étanchéité de ce raccord. De plus, la douille doit être vissée sur le manchon, ce qui nécessite de tourner la douille sur plusieurs tours pour obtenir le blocage et le verrouillage du raccord. Ainsi, ce type de raccord n'est pas fiable.

La présente invention vise à pallier ces inconvénients en proposant un dispositif de raccordement permettant une réduction du nombre de composants et une grande facilité de mise en oeuvre, et, de part sa conception simple, de remplacer avantageusement les systèmes actuels tout en assurant une connexion sûre, étanche et facilement démontable.

Dans ce but, l'invention concerne un dispositif de raccordement du genre indiqué en préambule, caractérisé en ce que le tube comporte une zone d'extrémité évasée de plus grand diamètre, couplée audit tube par un épaulement distant de son extrémité recevant l'interface d'une distance d, en ce que l'interface comporte un embout mâle destiné à recevoir ledit tube, suivi d'une collerette et d'une partie arrière, ledit embout mâle ayant une longueur 1 inférieure à la distance d et comportant au moins un organe d'étanchéité périphérique, et en ce que la douille comporte à une extrémité des moyens de retenue du tube coopérant avec ledit épaulement et à l'autre extrémité des moyens d'accrochage et de verrouillage de l'interface coopérant avec ladite collerette.

D'une manière avantageuse, ladite douille comprend une partie cylindrique dont la longueur intérieure L est sensiblement supérieure à la distance d. De plus, le diamètre intérieur de la douille est, de préférence, en tout point supérieur au diamètre extérieur du tube.

Dans la forme de réalisation préférée, l'embout mâle de l'interface, la zone d'extrémité du tube et la partie cylindrique de la douille ont des sections cylindriques dont les diamètres sont complémentaires de manière à assurer un montage serré.

De même, la longueur 1 de l'embout mâle est égale à au moins une fois le diamètre du tube de manière à assurer une surface de recouvrement suffisante entre l'embout mâle de l'interface, la zone d'extrémité du tube et la partie cylindrique de la douille.

Le tube peut présenter à son extrémité recevant l'interface un chanfrein, la douille et l'embout mâle de l'interface comportant, en regard dudit chanfrein, un chanfrein complémentaire.

Dans la forme de réalisation préférée de l'invention, les moyens d'accrochage et de verrouillage de la douille et de l'interface peuvent être constitués d'au moins une griffe prévue sur la douille et agencée pour s'accrocher sur ladite collerette de l'interface, ladite collerette pouvant également présenter des moyens de blocage en rotation de ladite douille, comme par exemple au moins une encoche.

Selon une variante de réalisation, les moyens d'accrochage et de verrouillage de la douille et de l'interface peuvent être constitués d'un système vissant prévu d'une part sur la douille et d'autre part sur la collerette de l'interface.

Pour faciliter sa préhension, la douille peut présenter sur sa surface extérieure des formes en relief.

Enfin, la partie arrière de l'interface peut présenter une forme adaptée à l'organe sur lequel elle est rapportée.

La présente invention et ses avantages apparaîtront mieux dans la description suivante de plusieurs exemples de réalisation, en référence aux dessins annexés, dans lesquels:
- la figure 1 représente une vue en perspective du dispositif de raccordement selon l'invention monté sur le tube et son interface,
- la figure 2 est une vue en coupe de la figure 1,
- la figure 3 est une vue en coupe du tube utilisé avec le dispositif de raccordement selon l'invention,
- les figures 4a et 4b sont des vues en coupe de différentes interfaces utilisées avec le dispositif de raccordement selon l'invention,
- la figure 5 est une vue en coupe de la douille,
- les figures 6 et 7 représentent des vues en coupe du dispositif de raccordement selon l'invention à différentes étapes de montage, et
- les figures 8 et 9 représentent des vues en perspective d'autres variantes du dispositif de raccordement selon l'invention.

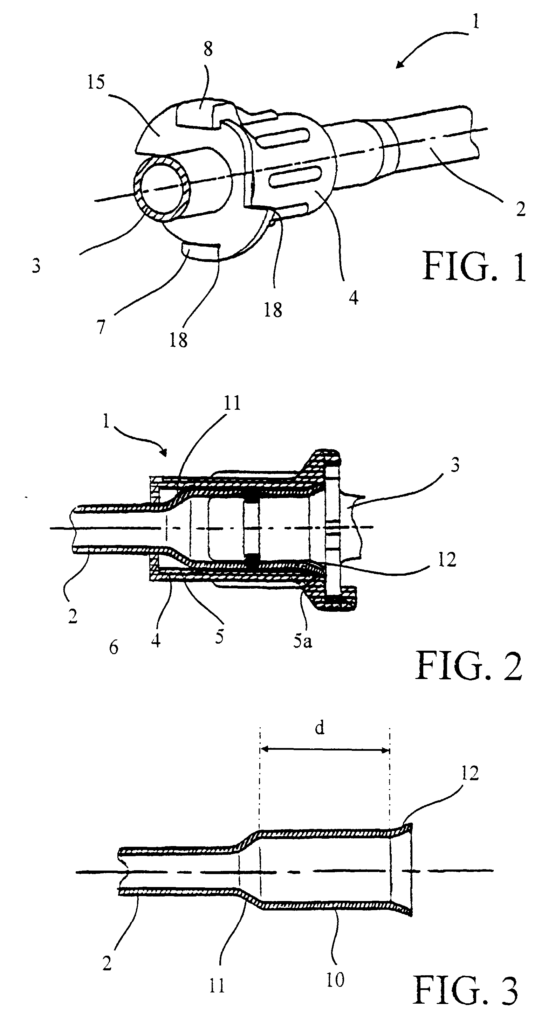

En référence aux figures 1 et 2, le dispositif de raccordement 1 selon l'invention est utilisé pour raccorder un tube 2 réalisé par exemple en matière rigide ou semi-rigide. telle que l'acier, l'aluminium ou le polyamide, à une interface 3 réalisée par exemple dans un matériau rigide. Il comprend une douille 4 pivotante, placée de manière coaxiale sur le tube 2 et l'interface 3.

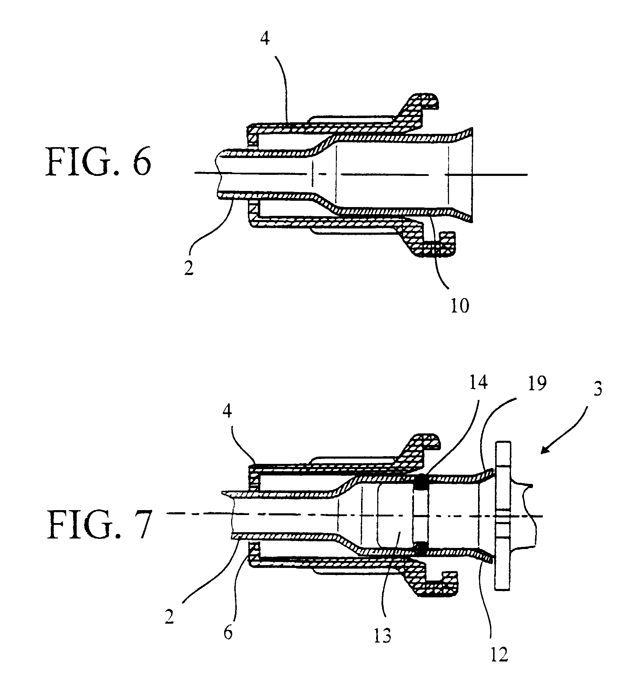

En référence plus précisément à la figure 5, la douille 4 selon l'invention est réalisée par exemple en matière semi-rigide et comporte une partie cylindrique intérieure 5 terminée à une extrémité par un rebord perpendiculaire 6 dont le diamètre est supérieur au diamètre du tube 2, ce rebord constituant un moyen de retenue dudit tube 2 comme cela sera décrit ci-après. L'autre extrémité de la douille 4 est terminée par deux pattes de fixation 7 dont l'une au moins présente la forme d'une griffe 8, ces pattes constituant des moyens d'accrochage et de verrouillage de l'interface 3 comme cela sera décrit ci-après. Du côté des pattes de fixation 7, la partie cylindrique 5 se termine par un chanfrein 5a. La douille 4 présente également des bossages 9 sur sa surface extérieure afin d'améliorer sa préhension.

La douille 4 est conçue pour être montée sur un tube 2 spécifique tel que celui représenté sur la figure 3. Ce tube 2 présente une zone d'extrémité 10 évasée obtenue grâce à un épaulement 11, ledit épaulement 11 étant prévu pour être en butée contre le rebord 6 de la douille 4 et constituer un moyen de retenue. Il est bien évident que la zone d'extrémité évasée 10 peut être remplacée par un simple épaulement prolongé par une zone d'extrémité reprenant ensuite le même diamètre que le tube 2 ou présentant une autre forme appropriée. La zone d'extrémité 10 représentée est rectiligne mais peut aussi avoir un diamètre croissant. Le tube 2 présente à son extrémité recevant l'interface 3, c'est-à-dire à l'extrémité de la zone évasée 10, un chanfrein 12 complémentaire au chanfrein 5a de la douille 4.

La longueur intérieure L de la partie cylindrique 5 de la douille 4 est sensiblement supérieure à la distance d entre l'épaulement 11 et l'extrémité du tube recevant l'interface et le diamètre intérieur de la douille 4 est en tout point supérieur au diamètre extérieur du tube 2.

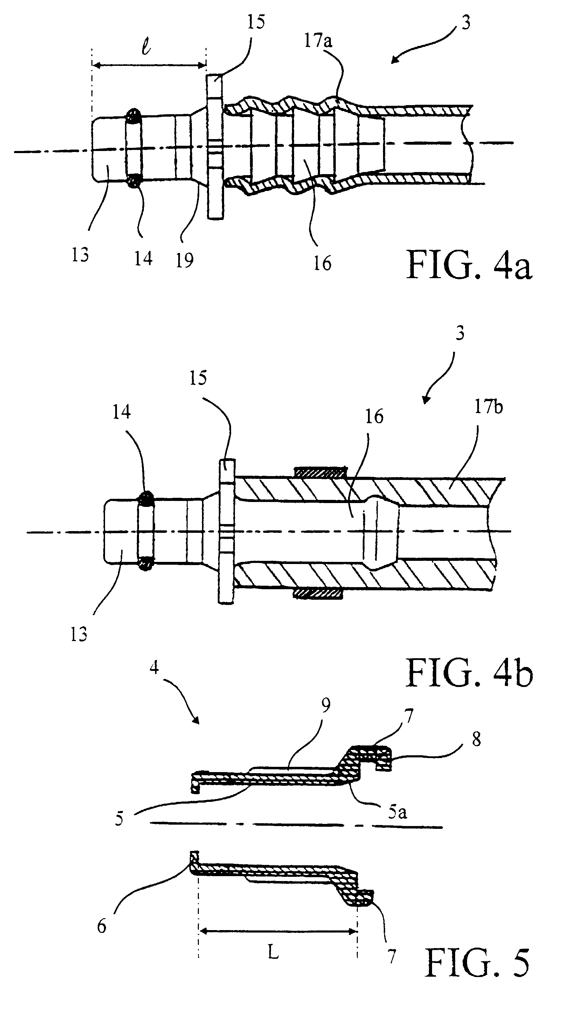

En référence aux figures 4a et 4b, l'interface 3 utilisée pour le dispositif de raccordement 1 présente à l'avant un embout mâle 13, de forme cylindrique, et équipé d'au moins un organe d'étanchéité 14 périphérique du type joint torique ou tout autre organe d'étanchéité équivalent. Pour des raisons de montabilité, le ou les joint(s) d'étanchéité 14 peuvent être lubrifiés et l'interface 3 peut être équipée d'un bouchon de protection de joint(s) qui sera retiré au dernier moment avant raccordement.

L'embout mâle 13 est de longueur 1 inférieure à la distance d entre l'épaulement 11 et l'extrémité du tube 2 recevant l'interface et présente une forme cylindrique de diamètre légèrement inférieur à celui dudit tube. L'embout mâle 13 est ensuite prolongé par une collerette d'accrochage et d'indexage 15 prolongée elle-même par la partie arrière 16 de l'interface 3. Cette partie arrière 16 assure la liaison de l'interface 3 avec un autre tube ou tout autre organe. Elle est donc de forme et de dimension variables selon l'élément sur lequel elle devra être rapportée, par exemple, un autre tube semi-rigide 17a (figure 4a), ou un tuyau en caoutchouc 17b (figure 4b). Il est aussi possible de rapporter l'interface 3 par collage, soudage ou montage ou toute autre manière, en force sur l'organe devant recevoir cette dernière, de manière à assurer une liaison étanche.

Comme le montre plus précisément la figure 1, la collerette 15 est de forme générale circulaire et présente des encoches 18 qui forment des butées pour les pattes de fixation 7 et la griffe 8 de la douille 4, ladite griffe 8 emprisonnant la collerette 15. Lesdites encoches 18 constituent des moyens de blocage en rotation de la douille 4. On obtient ainsi un positionnement, un accrochage et un verrouillage de ladite douille 4 sur l'interface 3.

A son extrémité liée à la collerette 15, l'embout mâle 13 présente un chanfrein 19 complémentaire au chanfrein 12 du tube 2 (cf. Fig. 4a) pour assurer l'immobilisation par coincement de l'extrémité du tube 2 entre l'embout mâle 13 de l'interface 3 et la douille 4.

En référence aux figures 6 et 7, le dispositif de raccordement 1 est mis en oeuvre de la façon suivante:

La douille 4 est mise en place sur le tube 2 et ramenée à la hauteur de la zone d'extrémité évasée 10.

L'ensemble tube 2/douille pivotante 4 est mis en place sur l'embout mâle 13 de l'interface 3 équipé de son joint 14, le chanfrein 12 du tube 2 permettant un montage du tube 2 sur l'interface 3 sans endommager le joint d'étanchéité 14. Du fait du choix de la longueur I par rapport à la distance d définies ci-dessus, la zone d'extrémité évasée 10 du tube 2 vient recouvrir entièrement l'embout mâle 13 de l'interface 3 en comprimant son joint d'étanchéité 14. Le chanfrein 12 du tube 2 vient en regard du chanfrein 19 de l'embout 13.

Le rebord 6 de la douille 4 est amené en butée contre l'épaulement 11 du tube 2 de manière à le bloquer en translation. Du fait du choix de la longueur L par rapport à la distance d définies ci-dessus, la partie cylindrique 5 vient recouvrir entièrement la zone d'extrémité évasée 10 du tube 2 comme cela est représenté sur la figure 2. Le chanfrein 5a de la douille 4 vient en regard du chanfrein 12 du tube 2.

A ce stade, la griffe d'accrochage 8 et la patte de fixation 7 doivent être placées en regard des encoches 18 prévues sur la collerette 15 de l'interface 3. La douille 4 est ensuite pivotée jusqu'à la mise en butée des pattes de fixation 7 et de la griffe d'accrochage 8 contre les encoches 18, la griffe 8 étant clipsée en force sur la collerette 15. Dès que la griffe d'accrochage 8 et les pattes de fixation 7 ont pris place dans les encoches 18, le dispositif de raccordement 1 est entièrement verrouillé, ce qui est obtenu en tournant la douille 4 uniquement d'un quart de tour, ce qui est très rapide.

Les formes en contact entre la douille 4, le tube 2 et l'embout mâle 13 sont cylindriques et définissent des surfaces de recouvrement importantes, sur une longueur supérieure à au moins une fois le diamètre du tube. De même, les diamètres correspondants de ces trois pièces sont complémentaires pour assurer un montage serré. L'ensemble de ces caractéristiques permet de maintenir un effort de compression suffisant sur la surface externe du tube 2 sous laquelle se trouve l'organe d'étanchéité 14 et de garantir un bon niveau d'étanchéité ainsi qu'un raccordement mécaniquement résistant et fiable dans le temps.

Si le tube 2 est réalisé dans un matériau souple, la douille 4 peut également assurer une mise en contrainte dudit tube 2 dans sa zone d'extrémité évasée 10 afin de maintenir un effort nécessaire à la bonne compression du joint d'étanchéité 14, évitant ainsi le fluage de ce dernier.

Pour la déconnexion du dispositif de raccordement 1, le mouvement inverse doit être donné à la douille pivotante 4 afin de libérer la griffe d'accrochage 8 et la patte de fixation 7 de la collerette 15 de l'interface 3, soit une rotation sur un quart de tour. La douille pivotante 4 peut être retirée de l'interface 3 ainsi que le tube 2. Un nouveau raccordement pourra alors être réalisé.

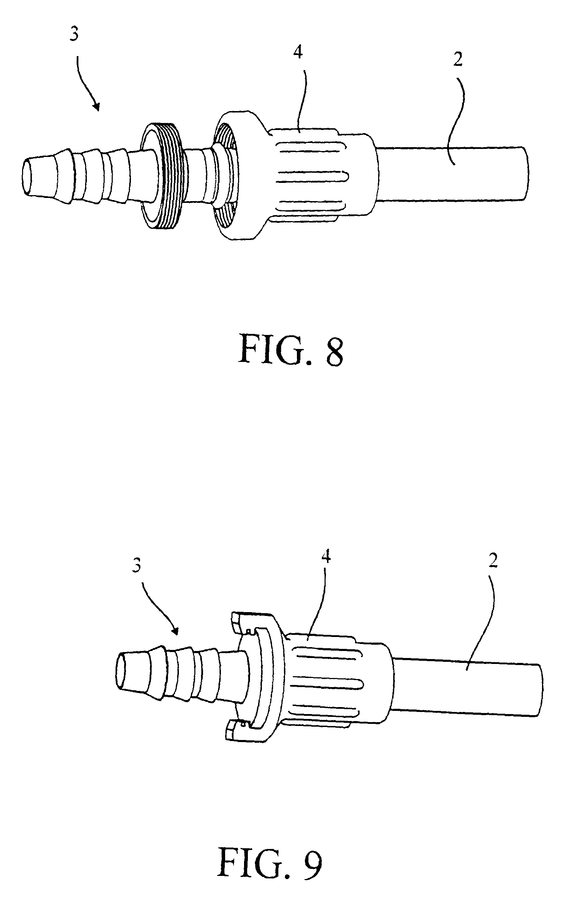

Les moyens d'accrochage et de verrouillage de la douille 4 et de l'interface 3 peuvent être constitués par d'autres moyens que ceux décrits ci-dessus, par exemple, un système vissant (Figure 8) ou même un système à griffes simples ou multiples (Figure 9), imposant ou non un outillage pour le démontage. De nombreuses autres solutions technologiques peuvent être envisagées pour assurer l'indexage et le verrouillage de la douille sur l'interface. Le choix sera fait en fonction du domaine d'application et du procédé d'élaboration des composants (injection plastique, usinage ou autre).

La présente invention n'est pas limitée aux exemples de réalisation décrits mais s'étend à toute modification et variante évidentes pour un homme du métier.

## Revendications

1. Dispositif de raccordement (1) démontable pour le raccordement d'un tube (2) sur une interface (3) au moyen d'un douille (4) coaxiale, caractérisé en ce que le tube (2) comporte une zone d'extrémité (10) évasée de plus grand diamètre, couplée audit tube par un épaulement (11) distant de son extrémité recevant l'interface (3) d'une distance (d), en ce que l'interface (3) comporte un embout mâle (13) destiné à recevoir ledit tube (2), suivi d'une collerette (15) et d'une partie arrière (16), ledit embout mâle (13) ayant une longueur (1) inférieure à la distance (d) et comportant au moins un organe d'étanchéité périphérique (14), et en ce que la douille (4) comporte à une extrémité des moyens de retenue (6) du tube (2) coopérant avec ledit épaulement (11) et à l'autre extrémité des moyens d'accrochage et de verrouillage (7, 8) de l'interface (3) coopérant avec ladite collerette (15).

2. Dispositif selon la revendication 1, caractérisé en ce que ladite douille (4) comprend une partie cylindrique (5) dont la longueur intérieure (L) est sensiblement supérieure à ladite distance (d).

3. Dispositif selon la revendication 2, caractérisé en ce que le diamètre intérieur de la douille (4) est en tout point supérieur au diamètre extérieur du tube (2).

4. Dispositif selon la revendication 2, caractérisé en ce que l'embout mâle (13) de l'interface (3), la zone d'extrémité (10) du tube (2) et la partie cylindrique (5) de la douille (4) ont des sections cylindriques dont les diamètres sont complémentaires de manière à assurer un montage serré.

5. Dispositif selon la revendication 4, caractérisé en ce que la longueur (1) de l'embout mâle est égale à au moins une fois le diamètre du tube (2) de manière à assurer une surface de recouvrement suffisante entre l'embout mâle (13) de l'interface (3), la zone d'extrémité (10) du tube (2) et la partie cylindrique (5) de la douille (4).

6. Dispositif selon la revendication 1, caractérisé en ce que ledit tube (2) présente à son extrémité recevant l'interface (3) un chanfrein (12) et en ce que la douille (4) et l'embout mâle (13) de l'interface (3) comportent, en regard dudit chanfrein (12), un chanfrein complémentaire (5a, 19).

7. Dispositif selon la revendication 1, caractérisé en ce que les moyens d'accrochage et de verrouillage de la douille (4) sont constitués d'au moins une griffe (8) prévue sur la douille (4) et agencée pour s'accrocher sur ladite collerette (15) de l'interface (3).

8. Dispositif selon la revendication 7, caractérisé en ce que ladite collerette (15) présente des moyens de blocage (18) en rotation de ladite douille (4).

9. Dispositif selon la revendication 8, caractérisé en ce que les moyens de blocage en rotation comportent au moins une encoche (18) prévue dans ladite collerette (15).

10. Dispositif selon la revendication 1, caractérisé en ce que les moyens d'accrochage et de verrouillage de la douille et de l'interface sont constitués d'un système vissant prévu d'une part sur la douille et d'autre part sur la collerette de l'interface.

11. Dispositif selon la revendication 1, caractérisé en ce que la douille (4) présente sur sa surface extérieure des formes en relief (9) facilitant sa préhension.

12. Dispositif selon la revendication 1, caractérisé en ce que la partie arrière (16) de l'interface (3) présente une forme adaptée à l'organe sur lequel elle est rapportée.
